# EUROPEAN PATENT SPECIFICATION

(11) **EP 3 443 878 B1**
(45) Date of publication and mention of the grant of the patent: **09.10.2019**
(21) Application number: 18188564.1
(22) Date of filing: 10.08.2018
(51) Int. Cl.: A47J 37/06, A47J 37/07, A47J 36/24

(54) **GRILL APPARATUS HAVING FOLDABLE HEAT GENERATING UNIT AND FOLDABLE GRILL UNIT**
GRILLVORRICHTUNG MIT FALTBARER WÄRMEERZEUGUNGSEINHEIT UND FALTBARER GRILLEINHEIT
APPAREIL DE GRIL AYANT UNE UNITÉ DE PRODUCTION DE CHALEUR PLIABLE ET UNITÉ DE GRIL PLIABLE

(30) Priority: 16.08.2017 KR 20170103380
(43) Date of publication of application: 20.02.2019
(73) Proprietor: Zaigle Co., Ltd., Seoul 07531 (KR)
(72) Inventor: LEE, Jin Hee, 07551 Seoul (KR)
(74) Representative: Hanna Moore + Curley

(56) References cited:
- CN-Y- 201 029 795
- US-A- 4 343 985

## Description

### TECHNICAL FIELD

The present disclosure relates to a grill apparatus having a foldable heat generating unit and a grill unit, and more particularly, to a grill apparatus having a foldable heat generating unit and a foldable grill unit, in which a plurality of heat sources are folded on each other or unfolded from each other, to radiate heat downward from the plurality of heat sources, and cook food to be cooked through the plurality of heat sources, thereby controlling the amount and the time of cooking the food according to user's necessity by folding the plurality of heat sources on each other or unfolding the plurality of heat sources from each other.

### CONVENTIONAL ART

Generally, a meat grill apparatus used to roast meat such as beef, pork, duck, or chicken is configured to place a grill or a meat grill plate over a charcoal or gas heater, and put meat on the grill or the meat grill plate to roast the meat.

In the case of using a grill, since a flame generated from a charcoal fire or a heater is directly applied to the meat, a partial burning phenomenon occurs even if the meat is turned over in a timely manner. According to the theories, the burnt meat contains many harmful substances such as carcinogenic substances, which may cause a problem reportedly when using such a grill. In addition, even when meat is roasted using a meat grill plate, the meat grill plate is heated while receiving heat from the heat source, to supposedly roast the meat on the grill plate. In this case, the surface of the meat contacting on the meat grill plate partly burns. As a result, the conventional meat grill apparatus as described above cannot completely solve the problem of burning meat.

In addition, when grilling meat using a grill or a meat grill plate as described above, it is often necessary to turn over the meat so that the front and back sides of the meat are evenly cooked. If such a turn-over of the meat is neglected, the meat is burned partially or totally.

As a result, cooking utensils such as frying pans were mainly used to grill pork, beef, chicken, duck, fish, etc. However, recently, in order to enjoy meat more deliciously, meat is put into a kiln made of loess, and is grilled with high heat and used for food.

Generally, when grilling meat or cooking food to then eat it, many people gather and eat the grilled meat or cooked food. When grilling meat or cooking food to be grilled, a frying pan or grill is used to grill the meat or cook the food to be grilled. By the way, when many people eat the grilled meat or food, it took a long time to cook the grilled meat or food. Accordingly, a large number of frying pans or grills are used to grill a large amount of meat or cook food to be grilled in a short time. However, even in this case, preparation or grilling of foods, and an after-use treatment process of the grill apparatus are complicated.

Further, in the case of a large number of frying pans or grills, it takes a lot of volume before and after use, which makes it difficult to store and move them.

### PRIOR ART DOCUMENT

Korean Utility Model Registration No. 20-0411296 (registered on March 07, 2006)

US4343985 discloses an apparatus comprising heat generating means located on an upper portion of a closed enclosure and reflective lateral surfaces for directing heat towards the food.

### DISCLOSURE

### TECHNICAL PROBLEM

The present disclosure has been conceived to solve the above problems, and it is an object of the present disclosure to provide a grill apparatus having a foldable heat generating unit and a foldable grill unit according to an aspect of the present disclosure, which is capable of setting the amount of using the grill unit and the foldable heat generating unit according to user's needs, thereby cooking a large amount of food to be grilled in a shorter time than the case of using a frying pan or grill.

It is another object of the present disclosure to provide a grill apparatus having a foldable heat generating unit or and a foldable grill unit, which is provided with a simple process of preparing or grilling food to be grilled while grilling a large amount of food to be grilled in a short time, and a convenient after-use treatment process.

It is still another object of the present disclosure to provide a grill apparatus having a foldable heat generating unit and a foldable grill unit, in which foods to be grilled can be grilled in a narrow space while a large amount of food can be grilled in a short time, and the grill apparatus can be kept in store conveniently before and after use it.

### TECHNICAL SOLUTION

According to an aspect of the present disclosure, there is provided a grill apparatus having a foldable heat generating unit and a foldable grill unit, the grill apparatus comprising: the foldable grill unit 100 in which a plurality of grill plates can be mutually unfolded or folded and on which a cooking material to be cooked is placed and cooked; and the foldable heat generating unit 200 disposed on an upper portion of a support pillar 50 disposed vertically from the grill unit 100 and in which a plurality of heaters can be mutually unfolded or folded while applying infrared rays to the grill unit 100.

The grill unit 100 includes a main grill plate 110 on which food stuff to be cooked is put and cooked, and a first auxiliary grill plate 120 and a second auxiliary grill plate 130 which are rotatably connected to both sides of the main grill plate 110, respectively, and are stacked with the main grill plate 110 to be folded on each other. The heat generating unit 200 includes a main heater 210 for applying infrared rays to the main grill plate 110 so as to cook the food stuff on the main grill plate 110, and a first auxiliary heater 220 and a second auxiliary heater 230
which are rotatably connected to both sides of the main heater 210, respectively, in which infrared rays are applied to the first auxiliary grill plate 120 and the second auxiliary grill plate 130 and which are formed to be foldable with the main heater 210.

The grill unit 100 includes a first grill plate hinge 122 for allowing the first auxiliary grill plate 120 to rotate while being connected to one edge of the main grill plate 110, and a second grill plate hinge 132 for allowing the second auxiliary grill plate 130 to rotate while being connected to the other edge of the main grill plate 110.

The grill unit 100 includes an oil container 150 disposed at a lower portion of the main grill plate 110 and collecting oil generated and dropped from the main grill plate 110. The main grill plate 110 includes an oil hole 115 drilled at a central portion of the main grill plate 110 so that the oil generated while the food stuff to be grilled is cooked on the main grill plate 110 can be dropped on the oil container 150.

The oil container 150 includes a first auxiliary oil container 125 which is slid from the oil container 150 to a position where the first auxiliary grill plate 120 is disposed so that the oil generated during the cooking of the food stuff can be dropped into the oil container 150 while the first auxiliary grill plate 120 is unfolded from the main grill plate 110, and a second auxiliary oil container 135 which is slid from the oil container 150 to a position where the second auxiliary grill plate 130 is disposed so that the oil generated during the cooking of the food stuff can be dropped into the oil container 150 while the second auxiliary grill plate 130 is unfolded from the main grill plate 110. The first auxiliary grill plate 120 includes a first oil hole 123 formed in the first auxiliary grill plate 120 at a position adjacent to the main grill plate 110 so that the oil generated from the first auxiliary grill plate 120 can be dropped into the first auxiliary oil container 125. The second auxiliary grill plate 130 includes a second oil hole 133 formed in the second auxiliary grill plate 130 at a position adjacent to the main grill plate 110 so that the oil generated from the second auxiliary grill plate 130 can be dropped into the second auxiliary oil container 135.

When the grill unit 100 is folded, the first auxiliary grill plate 120 is folded on the second auxiliary grill plate 130 after the second auxiliary grill plate 130 is folded on top of the main grill plate 110. When the grill unit 100 is unfolded, the first auxiliary griddle plate 120 is first unfolded while being rotated at one edge of the main grill plate 110 and then the second auxiliary grill plate 130 is unfolded while being rotated at the other edge of the main grill plate 110.

The main grill plate 110 may be formed to be inclined downward from an edge portion of the main grill plate 110 to a central portion thereof, and the first auxiliary grill plate 120 and the second auxiliary grill plate 130 may be formed of the upper and lower surfaces which are concave from the edge, respectively.

The main heater 210 may include a box-shaped body 211 and a heating element 213 that is accommodated in the box-shaped body 211 and emits infrared rays. The first auxiliary heater 220 may include a box-shaped first auxiliary body 221 and a first auxiliary heating element 223 which is accommodated in the first auxiliary body 221 and emits infrared rays. The second auxiliary heater 230 may include a box-shaped second auxiliary body 231 and a second auxiliary heating element 233 which is accommodated in the second auxiliary body 231 and emits infrared rays.

The heat generating unit 200 may include a first heater hinge 222 for allowing the first auxiliary heater 220 to rotate while the first auxiliary heater 220 is connected to one edge of the main heater 210, and a second heater hinge 232 for allowing the second auxiliary heater 230 to rotate while the second auxiliary heater 230 is connected to the other edge of the main heater 210. The first auxiliary heater 220 may be disposed to correspond to the first auxiliary grill plate 120 to thus apply infrared rays to the first auxiliary grill plate 120. The second auxiliary heater 230 may be disposed in correspondence to the second auxiliary grill plate 130 to thus apply infrared rays to the second auxiliary grill plate 130.

The first heater hinge 222 may interconnect the upper edge of the first auxiliary heat 220 and the lower one edge of the main heater 210. The second heater hinge 232 may interconnect the upper edge of the second auxiliary heater 230 and the lower other edge of the main heater 210.

The first auxiliary heater 220 may include a first opening and closing reflector 226 configured to open and close a lower portion of the first auxiliary heater 220. The second auxiliary heater 230 may include a second opening and closing reflector 236 configured to open and close a lower portion of the second auxiliary heater 230. A sliding groove 215 may be provided in the main heater 210 after being drilled in the longitudinal direction of the main heater 210 at both sides of the main heater 210 for allowing the first auxiliary heater 220 and the second auxiliary heater 230 to be slidably engaged with or disengaged from the main heater 210. A sliding protrusion 225 may be provided in each of the first auxiliary heater 220 and the second auxiliary heater 230 to be slidably engaged with or disengaged from the sliding groove 215. A power button 260 may be included in the main heater 210, the first auxiliary heater 220, and the second auxiliary heater 230, respectively, for allowing a user to turn on or turn off the power of the heating element 213, the first auxiliary heating element 223, and the second auxiliary heating element 233 separately, respectively.

### BRIEF DESCRIPTION OF THE DRAWINGS

FIG. 1 is a view showing a grill apparatus having a foldable heat generating unit and a foldable grill unit according to an embodiment of the present disclosure.
FIG. 2 is a view showing a cross section according to FIG. 1.
FIG. 3 is a view showing rotation of a part of a foldable grill unit and a foldable heat generating unit of a grill apparatus provided with the foldable heat generating unit and the foldable grill unit.
FIG. 4 is a view showing a part of the grill unit and a part of the heat generating unit according to FIG. 3 are folded.
FIG. 5 is a view showing a grill apparatus having a foldable heat generating unit and a foldable grill unit according to an embodiment of the present disclosure.
FIG. 6 is a view showing an operation of an oil container according to FIG. 5.
FIG. 7 is a view showing a grill apparatus having a foldable heat generating unit and a foldable grill unit according to an embodiment of the present disclosure.
FIG. 8 is a view showing that the grill unit according to FIG. 7 is folded.
FIG. 9 is a view showing a grill apparatus having a foldable heat generating unit and a foldable grill unit according to another embodiment of the present disclosure.
FIG. 10 is a view showing a use state according to FIG. 9.

### BEST MODE

The following detailed description of the invention refers to the accompanying drawings, which illustrate, by way of example, specific embodiments in which the invention may be practiced. These embodiments are described in sufficient detail to enable those skilled in the art to practice the invention. It should be understood that the various embodiments of the present disclosure are different, but need not be mutually exclusive. For example, certain features, structures, and characteristics described herein may be implemented in other embodiments without departing from the spirit and scope of the invention in the context of an embodiment. It is also to be understood that the position or arrangement of the individual components within each disclosed embodiment may be varied without departing from the spirit and scope of the invention. The following detailed description is, therefore, not to be taken in a limiting sense, and the scope of the present disclosure is to be limited only by the appended claims, along with the full scope of equivalents to which the claims are entitled, as appropriate. In the drawings, like reference numerals refer to like or equivalent features throughout the several views, length and area, thickness, and the like, and their shapes may be exaggerated for convenience.

Hereinafter, preferred embodiments of the present disclosure will be described in detail with reference to the accompanying drawings, so that those skilled in the art can easily carry out the present disclosure.

In the following detailed description, as an example, a plurality of heat sources are irradiated downward while they are folded or unfolded. The food to be cooked is cooked through the plurality of heat sources, while the plurality of heat sources are folded or unfolded. The amount and the time of cooking the food according to user's necessity can be controlled. That is, it is needless to say that the technical configuration of the grill apparatus (particularly, the grill unit and the heat generating unit) including a foldable heat generating unit and a foldable grill unit can be equally applied.

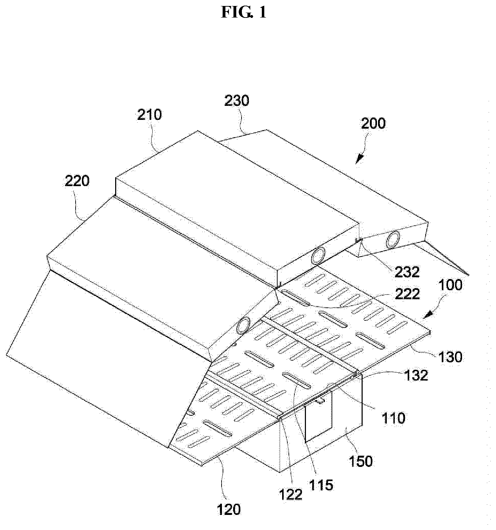

FIG. 1 is a view showing a grill apparatus having a foldable heat generating unit and a foldable grill unit according to an embodiment of the present disclosure.

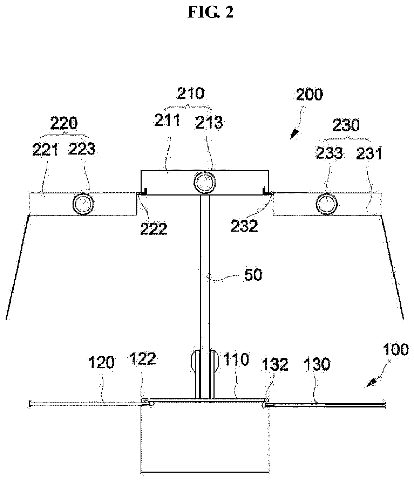

FIG. 2 is a view showing a cross section according to FIG. 1.

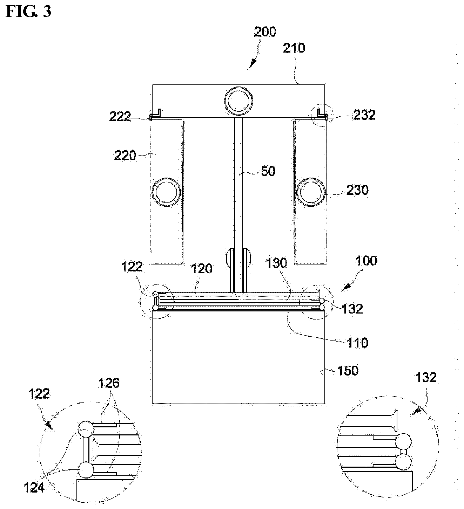

FIG. 3 is a view showing rotation of a part of a foldable grill unit and a foldable heat generating unit of a grill apparatus provided with the foldable heat generating unit and the foldable grill unit.

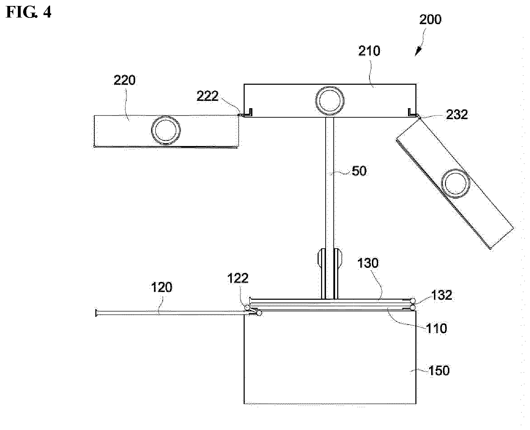

FIG. 4 is a view showing a part of the grill unit and a part of the heat generating unit according to FIG. 3 are folded.

Referring to FIGS. 1 to 4, a grill apparatus includes a foldable heat generating unit and a foldable grill unit. The grill apparatus includes the foldable grill unit 100 in which a plurality of grill plates can be mutually unfolded or folded; and the heat generating unit 200 in which a plurality of heaters are formed to be mutually unfolded or folded.

The grill unit 100 serves to support food stuffs to be grilled to grill food stuff to be grilled through heat sources applied from the heat generating unit 200 after having the food stuff to be grilled on the upper portion of the grill unit 100. The heat generating unit 200 applies infrared rays to the food stuff to be grilled in the grill unit 100 so that the food stuff to be grilled can be cooked. Here, the grill unit 100 is formed so that a plurality of grill plates can be mutually unfolded or folded while allowing a cooking material to be placed and cooked thereon. In addition, the heat generating unit 200 is formed to be disposed on an upper portion of a support pillar 50 disposed vertically from the grill unit 100 and in which a plurality of heaters can be mutually unfolded or folded while applying infrared rays to the grill unit 100. For this, the grill unit 100 includes a main grill plate 110 on which food stuff to be cooked is put and cooked, and a first auxiliary grill plate 120 and a second auxiliary grill plate 130 which are rotatably connected to both sides of the main grill plate 110, respectively, and are stacked with the main grill plate 110 to be folded on each other.

Further, the heat generating unit 200 includes a main heater 210 for applying infrared rays to the main grill plate 110 so as to cook the food stuff on the main grill plate 110, and a first auxiliary heater 220 and a second auxiliary heater 230 which are rotatably connected to both sides of the main heater 210, respectively, in which infrared rays are applied to the first auxiliary grill plate 120 and the second auxiliary grill plate 130 and which are formed to be foldable with the main heater 210.

Here, the main grill plate 110 of the grill unit 100 is disposed under the main heater 210 of the heat generating unit 200. The food stuff (hereinbelow, referred to as the food) to be grilled is put on the upper surface of the grill plate 110, so that the food to be grilled can be cooked through the heat source of the main heater 210.

The first auxiliary grill plate 120 is arranged to overlap with the main grill plate 110 and is rotated and unfolded in the main grill plate 110 in use. The first auxiliary grill plate 120 is arranged below the first auxiliary heater 220 which is rotated and unfolded in the main heater 210. Likewise, the second auxiliary grill plate 130 is arranged to overlap with the first auxiliary grill plate 120 and the main grill plate 110 and is rotated and unfolded in the main grill plate 110 in use, in a direction different from that of the first auxiliary grill plate 120. The second auxiliary grill plate 130 is arranged below the second auxiliary heater 230 which is rotated and unfolded in the main heater 210, in a direction different from that of the second auxiliary heater 230, to thereby grill the food to be grilled.

In this way, in order to allow the first auxiliary grill plate 120 and the second auxiliary grill plate 130 to smoothly be unfolded from the main grill plate 110, the grill unit 100 includes a first grill plate hinge 122 for allowing the first auxiliary grill plate 120 to rotate while being connected to one edge of the main grill plate 110, and a second grill plate hinge 132 for allowing the second auxiliary grill plate 130 to rotate while being connected to the other edge of the main grill plate 110.

Further, when the grill unit 100 is folded, the first auxiliary grill plate 120 is folded on the second auxiliary grill plate 130 after the second auxiliary grill plate 130 is folded on top of the main grill plate 110. Further, when the grill unit 100 is unfolded, the first auxiliary griddle plate 120 is first unfolded while being rotated at one edge of the main grill plate 110 and then the second auxiliary grill plate 130 is unfolded while being rotated at the other edge of the main grill plate 110.

As illustrated in FIG. 3, the first grill plate hinge 122 includes a plurality of first hinge shafts 124 and a plurality of first hinge plates 126 connected to each other. In the case that the first auxiliary grill plate 120 is unfolded from the second auxiliary grill plate 130, in a state where the former is folded on the latter, the unfolding operation can be performed smoothly. On the contrary, the first auxiliary grill plate 120 is folded on the second auxiliary grill plate 130 smoothly by the plurality of first hinge shafts 124 and the plurality of first hinge plates 126., to thus be stacked on the second auxiliary hinge plate 130. Similarly, the second grill plate hinge 132 also includes a plurality of second hinge shafts 134 and a plurality of second hinge plates 136 connected to each other. In the case that the second auxiliary grill plate hinge 130 is unfolded from the main grill plate 110, in a state where the former is folded on the latter, the unfolding operation can be performed smoothly.

The plurality of second hinge shafts 134 and the plurality of second hinge plates 136 allow the second auxiliary grill plate 130 to be folded on the main grill plate 110 smoothly to thus be stacked on the main grill plate 110.

Here, at a state where the main grill plate 110, and the first and second auxiliary grill plates 110 and 120 are folded on each other, to be stacked on each other, the length of one first hinge plate 126 disposed in the vertical direction from among the first hinge plates 126 is longer than the length of one second hinge plate 136 disposed in the vertical direction from among the second hinge plates 136.

That is, the first auxiliary grill plate 120 is connected to the main grill plate 110 by a first hinge shaft 124 and a first hinge plate 126 of the first grill plate hinge 122, to then be stacked on the upper surface of the second auxiliary grill plate 130 and to surround the second auxiliary grill plate 130. Therefore, the length of one first hinge plate 126 disposed in the vertical direction from among the first hinge plates 126 is longer than the length of one second hinge plate 136 disposed in the vertical direction from among the second hinge plates 136.

Further, the main grill plate 110 may be formed to be inclined downward from an edge portion of the main grill plate 110 to a central portion thereof, and the first auxiliary grill plate 120 and the second auxiliary grill plate 130 may be formed of the upper and lower surfaces that are concave from the edge, respectively.

According to an embodiment, the first auxiliary grill plate 130 is stacked on top of the main grill plate 110 when the grill unit 100 is initially used, and The first auxiliary grill plate 120 is stacked on the upper portion of the second auxiliary grill plate 130. Accordingly, the main heater 210 of the heat generating unit 200 can irradiate the upper surface of the first auxiliary grill plate 120 with infrared rays to grill food on the upper surface of the first auxiliary grill plate 120.

When the grill unit 100 is unfolded to use all of the main grill plate 110 and the first auxiliary grill plate 120 and the second auxiliary grill plate 130, the first auxiliary grill plate 120 is rotated and unfolded in the main grill plate 110 through the first grill plate hinge 122.

Further, the second auxiliary grill plate 130 is rotated and unfolded in the main grill plate 110 through the second grill plate hinge 132. In this case, the main heater 210 of the heat generating unit 200 irradiates infrared rays to the main grill plate 110, the first auxiliary heater 220 irradiates the first auxiliary grill plate 120 with infrared rays, and the second auxiliary heater 230 can irradiate infrared rays to the second auxiliary grill plate 130 to grill the respective foods.

As described above, it is preferable that the first and second auxiliary grill plates 120 and 130 be formed of the upper and lower surfaces which are concave from the edge of the first and second auxiliary grill plates 120 and 130 so that both surfaces the first and second auxiliary grill plates 120 and 130 can be used. That is, before the first auxiliary grill plate 120 is unfolded, the main heater 210 irradiates infrared lays on the upper surface of the first auxiliary grill plate 120, when the first auxiliary grill plate 120 is unfolded, the main heater 210 irradiates infrared lays on the upper surface of the second auxiliary grill plate 130, and when the second auxiliary grill plate 130 is unfolded, the main heater 210 irradiates infrared lays on the upper surface of the main grill plate 110.

In addition, when the use of the grill unit 100 is completed, the second auxiliary grill plate 130 is rotated so that the second auxiliary grill plate 130 is folded on top of the main grill plate 110 to then be stacked thereon for smooth storage. The first auxiliary grill plate 120 is rotated so that the first auxiliary grill plate 120 is folded on the upper portion of the second auxiliary grill plate 130 to then be stacked thereon, so as to be stored in a narrow space.

The grill unit 100 includes an oil container 150 disposed at a lower portion of the main grill plate 110 and collecting oil generated and dropped from the main grill plate 110. The main grill plate 110 includes an oil hole 115 drilled at a central portion of the main grill plate 110 so that the oil generated while the food stuff to be grilled is cooked on the main grill plate 110 can be dropped on the oil container 150. Accordingly, the oil generated as the food on the griddle plate 110 is grilled is collected through the oil container 150 while being dropped through the oil hole 115.Hereinafter, the oil container 150 will be described in more detail.

The main heater 210 of the heat generating unit 200 may include a box-shaped body 211 and a heating element 213 that emits infrared rays while being accommodated in the body 211, and the first auxiliary heater 220 may include a box-shaped first auxiliary body 221 and a first auxiliary heating element 223 that and emits infrared rays while being accommodated in the first auxiliary body 221.

The second auxiliary heater 230 may include a box-shaped second auxiliary body 231 and a second auxiliary heating element 233 that emits infrared rays while being accommodated in the second auxiliary body 231. Here, the body 211 surrounds the heating element 213 so that the heating element 213 can maintain its fixed position. The first auxiliary body 221 and the second auxiliary body 231 may also surround the first auxiliary heating element 223 and the second auxiliary heating element 233, respectively, so that the first auxiliary heating element 223 and the second auxiliary heating element 233 can be held in a fixed position, respectively.

The heat generating unit 200 may include a first heater hinge 222 for allowing the first auxiliary heater 220 to rotate while the first auxiliary heater 220 is connected to one edge of the main heater 210, and a second heater hinge 232 for allowing the second auxiliary heater 230 to rotate while the second auxiliary heater 230 is connected to the other edge of the main heater 210.

Further, the first auxiliary heater 220 may be disposed to correspond to the first auxiliary grill plate 120 to thus apply infrared rays to the first auxiliary grill plate 120, and the second auxiliary heater 230 may be disposed in correspondence to the second auxiliary grill plate 130 to thus apply infrared rays to the second auxiliary grill plate 130. The first heater hinge 222 may interconnect the upper edge of the first auxiliary heat 220 and the lower one edge of the main heater 210. The second heater hinge 232 may interconnect the upper edge of the second auxiliary heater 230 and the lower other edge of the main heater 210.

As a result, the first auxiliary heater 220 is rotated while being connected to the heater 210 via the first heater hinge 222, and the second auxiliary heater 230 is rotated while being connected to the main heater 210 via the second heater hinge 232.

In an embodiment, when the heating unit 200 is not used, the first auxiliary heater 220 and the second auxiliary heater 230 respectively connected to both sides of the main heater 210 are vertically disposed on both sides of the main heater 210 to be partially folded with the main heater 210. When only the main heater 210 is used in the heat generating unit 200, the first auxiliary heater 220 and the second auxiliary heater 230 are rotated at an angle of 10 degrees or more outward from the main heater 210 using the first heater hinge 222 and the second heater hinge 232. In this case, the heat source irradiated from the main heater 210 is reflected by the first auxiliary heater 220 and the second auxiliary heater 230 so that the heat source can be concentrated to the grill unit 100. When the main heater 210, the first auxiliary heater 220 and the second auxiliary heater 230 are both used, the first auxiliary heater 220 and the second auxiliary heater 230 are rotated at an angle of 90 degrees or more outward from the main heater 210 using the first heater hinge 222 and the second heater hinge 232. In this state, when the main grill plate 110 of the grill unit 100 and the first auxiliary grill plate 120 and the second auxiliary grill plate 130 are all unfolded, the main heater 210 is disposed on the upper portion of the main grill plate 110, the first auxiliary heater 220 is disposed on the upper portion of the first auxiliary grill plate 120, and the second auxiliary heater 230 is disposed on the upper portion of the second auxiliary grill plate 130, to thereby emit infrared rays, respectively.

When the use of the heat generating unit 200 is completed, the first auxiliary heater 220 and the second auxiliary heater 230 are rotated in the inner direction in which the main heater 210 is formed, and then the first auxiliary heater 220 and the second auxiliary heater 230 are disposed in a partially folded state with the main heater 210 by rotating.

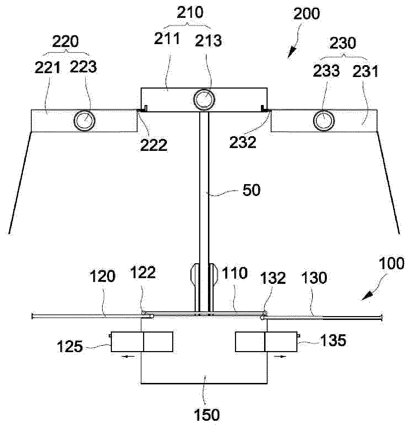

FIG. 5 is a view showing a grill apparatus having a foldable heat generating unit and a foldable grill unit according to an embodiment of the present disclosure.

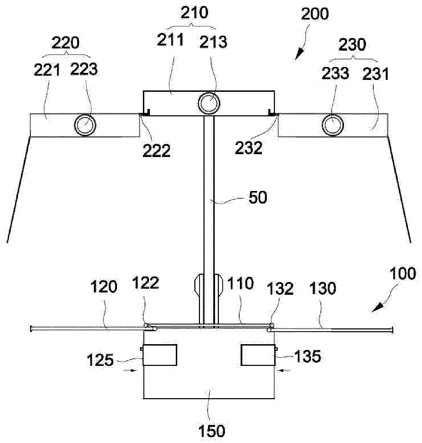

FIG. 6 is a view showing an operation of an oil container according to FIG. 5.

Referring to FIGS. 5 and 6, with reference FIGS. 1 to 4, a grill apparatus according to the present disclosure includes a foldable grill unit 100 and a foldable heat generating unit 200. The grill apparatus includes the foldable grill unit 100 in which a plurality of grill plates can be mutually unfolded or folded; and the foldable heat generating unit 200 in which a plurality of heaters can be mutually unfolded or folded.

The oil container 150 may include a first auxiliary oil container 125 which is slid from the oil container 150 to a position where the first auxiliary grill plate 120 is disposed so that the oil generated during the cooking of the food stuff can be dropped into the oil container 150 while the first auxiliary grill plate 120 is unfolded from the main grill plate 110.

The oil container 150 may include a second auxiliary oil container 135 which is slid from the oil container 150 to a position where the second auxiliary grill plate 130 is disposed so that the oil generated during the cooking of the food stuff can be dropped into the oil container 150 while the second auxiliary grill plate 130 is unfolded from the main grill plate 110.

The first auxiliary grill plate 120 may include a first oil hole 123 formed in the first auxiliary grill plate 120 at a position adjacent to the main grill plate 110 so that the oil generated from the first auxiliary grill plate 120 can be dropped into the first auxiliary oil container 125.

Further, the second auxiliary grill plate 130 may include a second oil hole 133 formed in the second auxiliary grill plate 130 at a position adjacent to the main grill plate 110 so that the oil generated from the second auxiliary grill plate 130 can be dropped into the second auxiliary oil container 135.

Here, when the first auxiliary grill plate 120 is unfolded and used from the main grill plate 110, the first auxiliary oil container 125 is slid from the oil rough 150 to a position where the first auxiliary grill plate 120 is disposed, and plays a role of receiving the oil dropped from the first auxiliary grill plate 120 and transmits the oil to the oil container 150.

That is, the oil dropped from the first auxiliary grill plate 120 to the first auxiliary oil container 125 flows into the oil container 150 from the first auxiliary oil container 125 and is collected in the oil container 150. For this, the first oil hole 123 drilled and formed in the first auxiliary grill plate 120 is formed to be positioned above the first auxiliary oil container 125 in a position adjacent to the main grill plate 110. Similarly, when the second auxiliary grill plate 130 is unfolded and used from the main grill plate 110, the second auxiliary oil container 135 is slid from the oil rough 150 to a position where the second auxiliary grill plate 130 is disposed, and plays a role of receiving the oil dropped from the second auxiliary grill plate 130 and transmits the oil to the oil container 150. That is, the oil dropped from the second auxiliary grill plate 130 to the second auxiliary oil container 135 flows into the oil container 150 from the second auxiliary oil container 125 and is collected in the oil container 150. For this, the second oil hole 133 drilled and formed in the second auxiliary grill plate 130 is formed to be positioned above the second auxiliary oil container 135 in a position adjacent to the main grill plate 110.

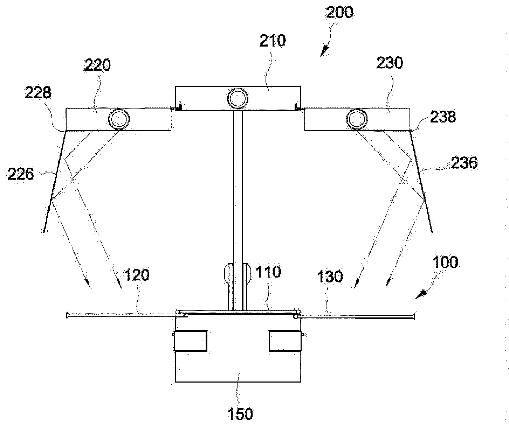

FIG. 7 is a view showing a grill apparatus having a foldable heat generating unit and a foldable grill unit according to an embodiment of the present disclosure.

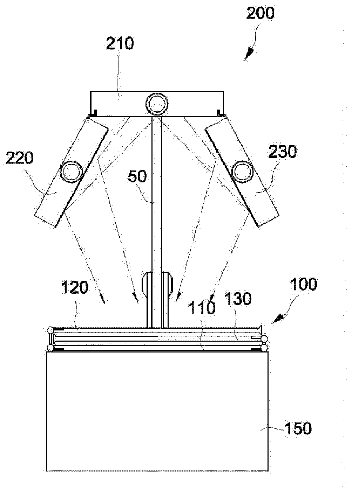

FIG. 8 is a view showing that the grill unit according to FIG. 7 is folded.

Referring to FIGS. 7 and 8, with reference FIGS. 1 to 4, a grill apparatus according to the present disclosure includes a foldable grill unit 100 and a foldable heat generating unit 200. The grill apparatus includes the foldable grill unit 100 in which a plurality of grill plates can be mutually unfolded or folded; and the foldable heat generating unit 200 in which a plurality of heaters can be mutually unfolded or folded.

As described above, the heat generating unit 200 includes a main heater 210 for applying infrared rays to the main grill plate 110 so as to cook the food stuff on the main grill plate 110, and a first auxiliary heater 220 and a second auxiliary heater 230
which are rotatably connected to both sides of the main heater 210, respectively, in which infrared rays are applied to the first auxiliary grill plate 120 and the second auxiliary grill plate 130 and which are formed to be foldable with the main heater 210.

In particular, the first auxiliary heater 220 may include a first opening and closing reflector 226 configured to open and close a lower portion of the first auxiliary heater 220, and the second auxiliary heater 230 may include a second opening and closing reflector 236 configured to open and close a lower portion of the second auxiliary heater 230. Here, the first opening and closing reflector 226 and the second opening and closing reflector 236 play a role of minimizing the emission of the infrared ray source radiated from the first auxiliary heater 220 and the second auxiliary heater 230 to the outside, and reflecting the infrared rays to the first and second auxiliary grill plates 120 and 130, respectively.

The first opening and closing reflector 226 is rotatably connected to a lower edge of the first auxiliary heater 220. For this, the first opening and closing reflector 226 is provided with a first hinge 228 that is rotatable while being connected with the first auxiliary heater 220.

Likewise, the second opening and closing reflector 236 is rotatably connected to a lower edge of the second auxiliary heater 230. Accordingly, the second opening and closing reflector 236 is provided with a second hinge 238 that is rotatable while being connected with the second auxiliary heater 230. Here, the first hinge 228 connects between the first opening and closing reflector 226 and the first auxiliary heater 220, and the second hinge 238 connects between the second opening and closing reflector 236 and the second auxiliary heater 230. It is preferable that the first opening and closing reflector 226 and the second opening and closing reflector 236 be rotated only by external pressurization.

That is, in order to rotate the first opening and closing reflector 226, a user may pressurize the first opening and closing reflector 226 to be rotated from the first auxiliary heater 220. When the pressurization is terminated, the first opening and closing reflector 226 is not rotated any more and is maintained in its fixed position. Similarly, in order to rotate the second opening and closing reflector 236, the user pressurizes the second opening and closing reflector 236 to be rotated from the second auxiliary heater 230, and when the pressurization is terminated, the second opening and closing reflector 236 is no longer rotated and remain in its fixed position.

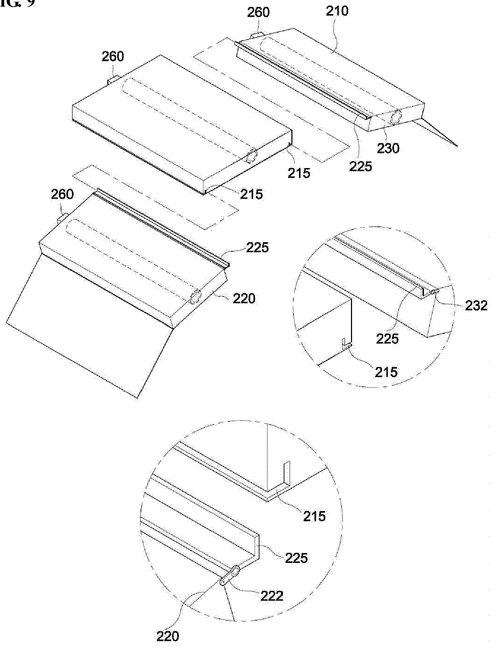

FIG. 9 is a view showing a grill apparatus having a foldable heat generating unit and a foldable grill unit according to another embodiment of the present disclosure.

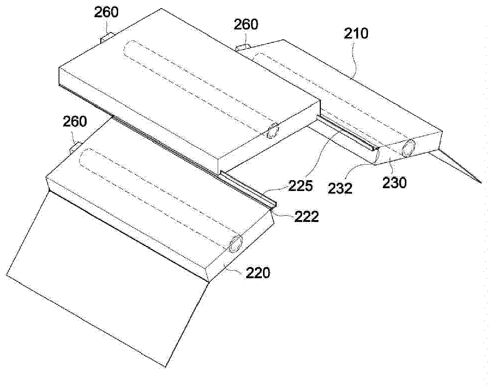

FIG. 10 is a view showing a use state according to FIG. 9.

Referring to FIGS. 9 and 10, with reference FIGS. 1 to 4, a grill apparatus according to the present disclosure includes a foldable grill unit 100 and a foldable heat generating unit 200. The grill apparatus includes the foldable grill unit 100 in which a plurality of grill plates can be mutually unfolded or folded; and the foldable heat generating unit 200 in which a plurality of heaters can be mutually unfolded or folded.

As described above, The heat generating unit 200 may include a first heater hinge 222 for allowing the first auxiliary heater 220 to rotate while the first auxiliary heater 220 is connected to one edge of the main heater 210, and a second heater hinge 232 for allowing the second auxiliary heater 230 to rotate while the second auxiliary heater 230 is connected to the other edge of the main heater 210. According to another embodiment, a sliding groove 215 may be provided in the main heater 210 after being drilled in the longitudinal direction of the main heater 210 at the lower portion of both sides of the main heater 210 for allowing the first auxiliary heater 220 and the second auxiliary heater 230 to be slidably engaged with or disengaged from the main heater 210, and a sliding protrusion 225 may be provided in each of the first auxiliary heater 220 and the second auxiliary heater 230 to be slidably engaged with or disengaged from the sliding groove 215. Here, the first heat generator hinge 222 may be provided between the first auxiliary heat generator 220 and the sliding protrusion 225.

In addition, the second heat generator hinge 232 may be provided between the second auxiliary heat generator 230 and the sliding protrusion 225. Accordingly, the first auxiliary heater 220 may be rotated while being connected to one side of the main heater 210 via the first heater hinge 222 with the sliding protrusion 225 being coupled to the sliding groove 215.

Further, the second auxiliary heater 230 may be rotated while being connected to the other side of the main heater 210 via the second heater hinge 232 with the sliding protrusion 225 being coupled to the sliding groove 215. The first auxiliary heater 220 and the second auxiliary heater 230 may be separated from the main heater 210 through the sliding groove 215 and the sliding protrusion 225, to then be kept in store, and when the first auxiliary heater 220 and the second auxiliary heater 230 are used, they can be easily combined and used with the main heater 210.

In particular, a power button 260 may be included in the main heater 210, the first auxiliary heater 220, and the second auxiliary heater 230, respectively, for allowing a user to turn on or turn off the power of the main heating element 213, the first auxiliary heating element 223, and the second auxiliary heating element 233 separately, respectively.

Accordingly, the main heater 210, the first auxiliary heater 220 and the second auxiliary heater 230 may be separately turned on and off through the power buttons 260 so that the use thereof can be smoothly performed. According to the above configuration, the amount of grilling of foods to be grilled can be adjusted according to the needs of the user, so that a plurality of grill plates and a plurality of heaters can be selectively used while using one grilling apparatus.

In addition, the preparation and grilling process for grilling the foods to be grilled and the after-use treatment processing of the grill apparatus are convenient and easy to use it. In addition, since it can be used unfolded at the time of use and folded after use, it is possible to obtain a merit that can be easily used in a narrow place. It is to be understood that the embodiments described above are illustrative in all aspects and not restrictive.

### ADVANTAGEOUS EFFECTS

A grill apparatus having a foldable heat generating unit and a foldable grill unit according to an embodiment of the present disclosure, has a technical effect of using a plurality of grill plates and heaters selectively with one grill apparatus so that the user can adjust the amount of food to be grilled according to the user's needs. A grill apparatus having a foldable heat generating unit and a foldable grill unit according to an embodiment of the present disclosure, provides the convenient preparation and grilling process for grilling the foods to be grilled and the easy after-use treatment processing of the grill apparatus, to thus provide an effect of easily using it.

A grill apparatus having a foldable heat generating unit and a foldable grill unit according to an embodiment of the present disclosure, has a technical effect of being easily used in a narrow place, in which it can be used unfolded at the time of use and folded after use.

## Claims

1. A grill apparatus comprising: a foldable heat generating unit and a foldable grill unit,
the grill apparatus comprising the foldable grill unit (100) in which a plurality of grill plates can be mutually unfolded or folded; and
the foldable heat generating unit (200) disposed on an upper portion of a support pillar 50 disposed vertically from the grill unit (100) and in which a plurality of heaters can be mutually unfolded or folded while applying infrared rays to the grill unit (100),
wherein the grill unit (100) comprises a main grill plate (110) on which food stuff to be cooked is put and cooked, and a first auxiliary grill plate (120) and a second auxiliary grill plate (130) which are rotatably connected to both sides of the main grill plate (110), respectively, and are stacked with the main grill plate (110) to be folded on each other, and
wherein the heat generating unit (200) comprises a main heater (210) for applying infrared rays to the main grill plate (110) so as to cook the food stuff on the main grill plate (110), and a first auxiliary heater (220) and a second auxiliary heater (230) which are rotatably connected to both sides of the main heater (210), respectively, in which infrared rays are applied to the first auxiliary grill plate (120) and the second auxiliary grill plate (130) and which are formed to be foldable with the main heater (210),
wherein the first auxiliary heater (220) comprises
a first opening and closing reflector (226) formed to open and close a lower portion of the first auxiliary heater (220), and
wherein the second auxiliary heater (230) comprises
a second opening and closing reflector (236) formed to open and close a lower portion of the second auxiliary heater (230).

2. The grill apparatus of claim 1, wherein
the grill unit (100) includes a first grill plate hinge (122) for allowing the first auxiliary grill plate (120) to rotate while being connected to one edge of the main grill plate (110), and a second grill plate hinge (132) for allowing the second auxiliary grill plate (130) to rotate while being connected to the other edge of the main grill plate (110).

3. The grill apparatus of claim 1, wherein
the grill unit (100) includes an oil container (150) disposed at a lower portion of the main grill plate (110) and collecting oil generated and dropped from the main grill plate (110), and
the main grill plate (110) includes an oil hole (115) drilled at a central portion of the main grill plate (110) so that the oil generated while the food stuff to be grilled is cooked on the main grill plate (110) can be dropped on the oil container (150).

4. The grill apparatus of claim 3, wherein
the oil container (150) includes a first auxiliary oil container (125) which is slid from the oil container (150) to a position where the first auxiliary grill plate (120) is disposed so that the oil generated during the cooking of the food stuff can be dropped into the oil container (150) while the first auxiliary grill plate (120) is unfolded from the main grill plate (110), and
a second auxiliary oil container (135) which is slid from the oil container (150) to a position where the second auxiliary grill plate (130) is disposed so that the oil generated during the cooking of the food stuff can be dropped into the oil container (150) while the second auxiliary grill plate (130) is unfolded from the main grill plate (110),
wherein the first auxiliary grill plate (120) includes a first oil hole (123) formed in the first auxiliary grill plate (120) at a position adjacent to the main grill plate (110) so that the oil generated from the first auxiliary grill plate (120) can be dropped into the first auxiliary oil container (125), and
the second auxiliary grill plate (130) includes a second oil hole (133) formed in the second auxiliary grill plate (130) at a position adjacent to the main grill plate (110) so that the oil generated from the second auxiliary grill plate (130) can be dropped into the second auxiliary oil container (135).

5. The grill apparatus of claim 1, wherein,
when the grill unit (100) is folded, the first auxiliary grill plate (120) is folded on the second auxiliary grill plate (130) after the second auxiliary grill plate (130) is folded on top of the main grill plate (110), and when the grill unit (100) is unfolded, the first auxiliary griddle plate (120) is first unfolded while being rotated at one edge of the main grill plate (110) and then the second auxiliary grill plate (130) is unfolded while being rotated at the other edge of the main grill plate (110), and
the main grill plate (110) is formed to be inclined downward from an edge portion of the main grill plate (110) to a central portion thereof, and
the first auxiliary grill plate (120) and the second auxiliary grill plate (130) are formed of the upper and lower surfaces which are concave from the edge, respectively.

6. The grill apparatus of claim 1, wherein
the main heater (210) includes a box-shaped body (211) and a heating element (213) that is accommodated in the box-shaped body (211) and emits infrared rays, and
the first auxiliary heater (220) includes a box-shaped first auxiliary body (221) and a first auxiliary heating element (223) which is accommodated in the first auxiliary body (221) and emits infrared rays, and
the second auxiliary heater (230) includes a box-shaped second auxiliary body (231) and a second auxiliary heating element (233) which is accommodated in the second auxiliary body (231) and emits infrared rays.

7. The grill apparatus of claim 1, wherein
the heat generating unit (200) includes a first heater hinge (222) for allowing the first auxiliary heater (220) to rotate while the first auxiliary heater (220) is connected to one edge of the main heater (210), and a second heater hinge (232) for allowing the second auxiliary heater (230) to rotate while the second auxiliary heater (230) is connected to the other edge of the main heater (210),
the first auxiliary heater (220) is disposed to correspond to the first auxiliary grill plate (120) to thus apply infrared rays to the first auxiliary grill plate (120), and
the second auxiliary heater (230) is disposed in correspondence to the second auxiliary grill plate (130) to thus apply infrared rays to the second auxiliary grill plate (130).

8. The grill apparatus of claim 7, wherein
the first heater hinge (222) interconnects the upper edge of the first auxiliary heat (220) and the lower one edge of the main heater (210), and
the second heater hinge (232) interconnects the upper edge of the second auxiliary heater (230) and the lower other edge of the main heater (210).

9. The grill apparatus of claim 1, wherein
a sliding groove (215) is provided in the main heater (210) after being drilled in the longitudinal direction of the main heater (210) at the lower portion of both sides of the main heater (210) for allowing the first auxiliary heater (220) and the second auxiliary heater (230) to be slidably engaged with or disengaged from the main heater (210), and
a sliding protrusion (225) is provided in each of the first auxiliary heater (220) and the second auxiliary heater (230) to be slidably engaged with or disengaged from the sliding groove (215).

10. The grill apparatus of claim 6, wherein
a power button (260) is included in the main heater (210), the first auxiliary heater (220), and the second auxiliary heater (230), respectively, for allowing a user to turn on or turn off the power of the heating element (213), the first auxiliary heating element (223), and the second auxiliary heating element (233) separately, respectively.

## Patentansprüche

1. Grillvorrichtung, umfassend: eine einklappbare Wärmeerzeugungseinheit und eine einklappbare Grilleinheit,
wobei die Grillvorrichtung die einklappbare Grilleinheit (100) umfasst, in der eine Mehrzahl von Grillplatten wechselseitig ausgeklappt oder eingeklappt werden kann; und
die einklappbare Wärmeerzeugungseinheit (200), die an einem oberen Abschnitt einer Stützsäule 50 angeordnet ist, welche vertikal von der Grilleinheit (100) angeordnet ist, und in der eine Mehrzahl von Heizeinrichtungen wechselseitig ausgeklappt oder eingeklappt werden kann, während Infrarotstrahlen auf die Grilleinheit (100) aufgebracht werden,
wobei die Grilleinheit (100) eine Hauptgrillplatte (110) umfasst, auf der zu garende Lebensmittel platziert und gegart werden, und eine erste Nebengrillplatte (120) und eine zweite Nebengrillplatte (130), die jeweils drehbar an beiden Seiten der Hauptgrillplatte (110) verbunden sind und mit der Hauptgrillplatte (110) übereinander angeordnet sind, um aufeinander eingeklappt zu werden, und
wobei die Wärmeerzeugungseinheit (200) eine Hauptheizeinrichtung (210) zum Aufbringen von Infrarotstrahlen auf die Hauptgrillplatte (110) umfasst, um die Lebensmittel auf der Hauptgrillplatte (110) zu garen, und eine erste Nebenheizeinrichtung (220) und eine zweite Nebenheizeinrichtung (230), die jeweils drehbar an beiden Seiten der Hauptheizeinrichtung (210) verbunden sind, in denen Infrarotstrahlen auf die erste Nebengrillplatte (120) und die zweite Nebengrillplatte (130) aufgebracht werden und die dafür ausgebildet sind, mit der Hauptheizeinrichtung (210) einklappbar zu sein,
wobei die erste Nebenheizeinrichtung (220) umfasst:
einen ersten Öffnungs- und Schließreflektor (226), der zum Öffnen und Schließen eines unteren Abschnitts der ersten Nebenheizeinrichtung (220) ausgebildet ist, und
wobei die zweite Nebenheizeinrichtung (230) umfasst:
einen zweiten Öffnungs- und Schließreflektor (236), der zum Öffnen und Schließen eines unteren Abschnitts der zweiten Nebenheizeinrichtung (230) ausgebildet ist.

2. Grillvorrichtung nach Anspruch 1, wobei
die Grilleinheit (100) ein erstes Grillplattengelenk (122) aufweist, um es der ersten Nebengrillplatte (120) zu gestatten, sich zu drehen, während sie mit einer Kante der Hauptgrillplatte (110) verbunden ist, und ein zweites Grillplattengelenk (132), um es der zweiten Nebengrillplatte (130) zu gestatten, sich zu drehen, während sie mit der anderen Kante der Hauptgrillplatte (110) verbunden ist.

3. Grillvorrichtung nach Anspruch 1, wobei
die Grilleinheit (100) einen Ölbehälter (150) aufweist, der an einem unteren Abschnitt der Hauptgrillplatte (110) angeordnet ist und entstehendes und tropfendes Öl von der Hauptgrillplatte (110) sammelt, und
die Hauptgrillplatte (110) eine Ölbohrung (115) aufweist, die in einem zentralen Abschnitt der Hauptgrillplatte (110) gebohrt ist, sodass das während des Garens der zu grillenden Lebensmittel auf der Hauptgrillplatte (110) entstehende Öl auf den Ölbehälter (150) getropft werden kann.

4. Grillvorrichtung nach Anspruch 3, wobei
der Ölbehälter (150) einen ersten Nebenölbehälter (125) aufweist, der von dem Ölbehälter (150) an eine Position verschoben wird, an der die erste Nebengrillplatte (120) angeordnet ist, sodass das während des Garens der Lebensmittel entstehende Öl in den Ölbehälter (150) getropft werden kann, während die erste Nebengrillplatte (120) von der Hauptgrillplatte (110) ausgeklappt ist, und
einen zweiten Nebenölbehälter (135), der von dem Ölbehälter (150) an eine Position verschoben wird, an der die zweite Nebengrillplatte (130) angeordnet ist, sodass das während des Garens der Lebensmittel entstehende Öl in den Ölbehälter (150) getropft werden kann, während die zweite Nebengrillplatte (130) von der Hauptgrillplatte (110) ausgeklappt ist,
wobei die erste Nebengrillplatte (120) eine erste Ölbohrung (123) aufweist, die in der ersten Nebengrillplatte (120) an einer zu der Hauptgrillplatte (110) benachbarten Position ausgebildet ist, sodass das entstehende Öl von der ersten Nebengrillplatte (120) in den ersten Nebenölbehälter (125) getropft werden kann, und
die zweite Nebengrillplatte (130) eine zweite Ölbohrung (133) aufweist, die in der zweiten Nebengrillplatte (130) an einer zu der Hauptgrillplatte (110) benachbarten Position ausgebildet ist, sodass das entstehende Öl von der zweiten Nebengrillplatte (130) in den zweiten Nebenölbehälter (135) getropft werden kann.

5. Grillvorrichtung nach Anspruch 1, wobei,
wenn die Grilleinheit (100) eingeklappt wird, die erste Nebengrillplatte (120) auf der zweiten Nebengrillplatte (130) eingeklappt wird, nachdem die zweite Nebengrillplatte (130) oben auf der Hauptgrillplatte (110) eingeklappt wird, und wenn die Grilleinheit (100) ausgeklappt wird, die erste Nebengrillplatte (120) zuerst ausgeklappt wird, während sie an einer Kante der Hauptgrillplatte (110) gedreht wird, und dann die zweite Nebengrillplatte (130) ausgeklappt wird, während sie an der anderen Kante der Hauptgrillplatte (110) gedreht wird, und
die Hauptgrillplatte (110) dafür ausgebildet ist, von einem Kantenabschnitt der Hauptgrillplatte (110) zu einem zentralen Abschnitt davon nach unten geneigt zu werden, und
die erste Nebengrillplatte (120) und die zweite Nebengrillplatte (130) jeweils aus der oberen und der unteren Fläche gebildet sind, die konkav von der Kante sind.

6. Grillvorrichtung nach Anspruch 1, wobei
die Hauptheizeinrichtung (210) einen kastenförmigen Körper (211) und ein Heizelement (213) aufweist, das in dem kastenförmigen Körper (211) beherbergt ist und Infrarotstrahlen ausgibt, und
die erste Nebenheizeinrichtung (220) einen kastenförmigen ersten Nebenkörper (221) und ein erstes Nebenheizelement (223) aufweist, das in dem ersten Nebenkörper (221) beherbergt ist und Infrarotstrahlen ausgibt, und
die zweite Nebenheizeinrichtung (230) einen kastenförmigen zweiten Nebenkörper (231) und ein zweites Nebenheizelement (233) aufweist, das in dem zweiten Nebenkörper (231) beherbergt ist und Infrarotstrahlen ausgibt.

7. Grillvorrichtung nach Anspruch 1, wobei
die Wärmeerzeugungseinheit (200) ein erstes Heizeinrichtungsgelenk (222) aufweist, um es der ersten Nebenheizeinrichtung (220) zu gestatten, sich zu drehen, während die erste Nebenheizeinrichtung (220) mit einer Kante der Hauptheizeinrichtung (210) verbunden ist, und ein zweites Heizeinrichtungsgelenk (232), um es der zweiten Nebenheizeinrichtung (230) zu gestatten, sich zu drehen, während die zweite Nebenheizeinrichtung (230) mit der anderen Kante der Hauptheizeinrichtung (210) verbunden ist,
die erste Nebenheizeinrichtung (220) derart angeordnet ist, dass sie der ersten Nebengrillplatte (120) entspricht, um somit Infrarotstrahlen auf die erste Nebengrillplatte (120) aufzubringen, und
die zweite Nebenheizeinrichtung (230) in Entsprechung mit der zweiten Nebengrillplatte (130) angeordnet ist, um somit Infrarotstrahlen auf die zweite Nebengrillplatte (130) aufzubringen.

8. Grillvorrichtung nach Anspruch 7, wobei
das erste Heizeinrichtungsgelenk (222) die obere Kante der ersten Nebenheizeinrichtung (220) und die untere eine Kante der Hauptheizeinrichtung (210) miteinander verbindet, und
das zweite Heizeinrichtungsgelenk (232) die obere Kante der zweiten Nebenheizeinrichtung (230) und die untere andere Kante der Hauptheizeinrichtung (210) miteinander verbindet.

9. Grillvorrichtung nach Anspruch 1, wobei
eine Gleitrille (215) in der Hauptheizeinrichtung (210) bereitgestellt ist, nachdem sie in der Längsrichtung der Hauptheizeinrichtung (210) an dem unteren Abschnitt beider Seiten der Hauptheizeinrichtung (201) gebohrt wurde, um es der ersten Nebenheizeinrichtung (220) und der zweiten Nebenheizeinrichtung (230) zu gestatten, gleitbar mit der Hauptheizeinrichtung (210) in Eingriff oder aus dem Eingriff zu gehen, und
ein Gleitvorsprung (225) in jeder der ersten Nebenheizeinrichtung (220) und der zweiten Nebenheizeinrichtung (230) bereitgestellt ist, um gleitbar mit der Gleitrille (215) in Eingriff oder aus dem Eingriff zu gehen.

10. Grillvorrichtung nach Anspruch 6, wobei
eine Ein/Aus-Taste (260) jeweils in der Hauptheizeinrichtung (210), der ersten Nebenheizeinrichtung (220) und der zweiten Nebenheizeinrichtung (230) enthalten ist, um es einem Benutzer zu gestatten, den Strom des Heizelements (213), des ersten Nebenheizelements (223) und des zweiten Nebenheizelements (233) jeweils separat einzuschalten oder auszuschalten.

## Revendications

1. Appareil de gril comprenant : une unité de production de chaleur pliable et une unité de gril pliable,
l'appareil de gril comprenant l'unité de gril pliable (100) dans laquelle une pluralité de plaques de gril peuvent être mutuellement dépliées ou pliées ; et
l'unité de production de chaleur pliable (200) étant disposée sur une partie supérieure d'un pilier de support 50 disposé verticalement à partir de l'unité de gril (100), et dans laquelle une pluralité de dispositifs de chauffage peuvent être mutuellement dépliés ou pliés tout en appliquant des rayons infrarouges à l'unité de gril (100) ,
l'unité de gril (100) comprenant une plaque de gril principale (110) sur laquelle un aliment à cuire est placé et cuit, et une première plaque de gril auxiliaire (120) et une seconde plaque de gril auxiliaire (130) qui sont reliées de manière rotative aux deux côtés de la plaque de gril principale (110), respectivement, et sont empilées avec la plaque de gril principale (110) pour être pliées l'une sur l'autre, et
l'unité de production de chaleur (200) comprenant un dispositif de chauffage principal (210) pour appliquer des rayons infrarouges à la plaque de gril principale (110) de façon à cuire l'aliment sur la plaque de gril principale (110), et un premier dispositif de chauffage auxiliaire (220) et un second dispositif de chauffage auxiliaire (230) qui sont reliés de manière rotative aux deux côtés du dispositif de chauffage principal (210), respectivement, par lesquels des rayons infrarouges sont appliqués à la première plaque de gril auxiliaire (120) et à la seconde plaque de gril auxiliaire (130), et qui sont formés pour être pliables avec le dispositif de chauffage principal (210),
le premier dispositif de chauffage auxiliaire (220) comprenant
un premier réflecteur d'ouverture et de fermeture (226) formé pour ouvrir et fermer une partie inférieure du premier dispositif de chauffage auxiliaire (220), et
le second dispositif de chauffage auxiliaire (230) comprenant
un second réflecteur d'ouverture et de fermeture (236) formé pour ouvrir et fermer une partie inférieure du second dispositif de chauffage auxiliaire (230).

2. Appareil de gril selon la revendication 1, dans lequel
l'unité de gril (100) comprend une première charnière de plaque de gril (122) pour permettre à la première plaque de gril auxiliaire (120) de tourner tout en étant reliée à un bord de la plaque de gril principale (110), et une seconde charnière de plaque de gril (132) pour permettre à la seconde plaque de gril auxiliaire (130) de tourner tout en étant reliée à l'autre bord de la plaque de gril principale (110).

3. Appareil de gril selon la revendication 1, dans lequel
l'unité de gril (100) comprend un contenant à huile (150) disposé à une partie inférieure de la plaque de gril principale (110) et collectant de l'huile générée et tombant de la plaque de gril principale (110), et
la plaque de gril principale (110) comprend un trou d'huile (115) percé à une partie centrale de la plaque de gril principale (110) de telle sorte que l'huile générée tandis que l'aliment à griller est cuit sur la plaque de gril principale (110), peut tomber sur le contenant à huile (150) .

4. Appareil de gril selon la revendication 3, dans lequel
le contenant à huile (150) comprend un premier contenant à huile auxiliaire (125) qui est coulissé à partir du contenant à huile (150) jusqu'à une position dans laquelle la première plaque de gril auxiliaire (120) est disposée de telle sorte que l'huile générée pendant la cuisson de l'aliment peut tomber dans le contenant à huile (150) tandis que la première plaque de gril auxiliaire (120) est dépliée de la plaque de gril principale (110), et
un second contenant à huile (135) qui est coulissé à partir du contenant à huile (150) jusqu'à une position dans laquelle la seconde plaque de gril auxiliaire (130) est disposée de telle sorte que l'huile générée pendant la cuisson de l'aliment peut tomber dans le contenant à huile (150) tandis que la seconde plaque de gril auxiliaire (130) est dépliée de la plaque de gril principale (110),
la première plaque de gril auxiliaire (120) comprenant un premier trou d'huile (123) formé dans la première plaque de gril auxiliaire (120) dans une position adjacente à la plaque de gril principale (110) de telle sorte que l'huile générée à partir de la première plaque de gril auxiliaire (120) peut tomber dans le premier contenant à huile auxiliaire (125), et
la seconde plaque de gril auxiliaire (130) comprenant un second trou d'huile (133) formé dans la seconde plaque de gril auxiliaire (130) dans une position adjacente à la plaque de gril principale (110) de telle sorte que l'huile générée à partir de la seconde plaque de gril auxiliaire (130) peut tomber dans le second contenant à huile auxiliaire (135).

5. Appareil de gril selon la revendication 1, dans lequel,
lorsque l'unité de gril (100) est pliée, la première plaque de gril auxiliaire (120) est pliée sur la seconde plaque de gril auxiliaire (130) après que la seconde plaque de gril auxiliaire (130) est pliée sur le dessus de la plaque de gril principale (110) et, lorsque l'unité de gril (100) est dépliée, la première plaque de gril auxiliaire (120) est d'abord dépliée tout en étant tournée au niveau d'un bord de la plaque de gril principale (110), puis la seconde plaque de gril auxiliaire (130) est dépliée tout en étant tournée au niveau de l'autre bord de la plaque de gril principale (110), et
la plaque de gril principale (110) est formée pour être inclinée vers le bas à partir d'une partie de bord de la plaque de gril principale (110) jusqu'à une partie centrale de celle-ci, et
la première plaque de gril auxiliaire (120) et la seconde plaque de gril auxiliaire (130) sont formées des surfaces supérieure et inférieure qui sont concaves à partir du bord, respectivement.

6. Appareil de gril selon la revendication 1, dans lequel
le dispositif de chauffage principal (210) comprend un corps en forme de boîte (211) et un élément chauffant (213) qui est logé dans le corps en forme de boîte (211) et émet des rayons infrarouges, et
le premier dispositif de chauffage auxiliaire (220) comprend un premier corps auxiliaire en forme de boîte (221) et un premier élément chauffant auxiliaire (223) qui est logé dans le premier corps auxiliaire (221) et émet des rayons infrarouges, et
le second dispositif de chauffage auxiliaire (230) comprend un second corps auxiliaire en forme de boîte (231) et un second élément chauffant auxiliaire (233) qui est logé dans le second corps auxiliaire (231) et émet des rayons infrarouges.

7. Appareil de gril selon la revendication 1, dans lequel
l'unité de production de chaleur (200) comprend une première charnière de dispositif de chauffage (222) pour permettre au premier dispositif de chauffage auxiliaire (220) de tourner tandis que le premier dispositif de chauffage auxiliaire (220) est relié à un bord du dispositif de chauffage principal (210), et une seconde charnière de dispositif de chauffage (232) pour permettre au second dispositif de chauffage auxiliaire (230) de tourner tandis que le second dispositif de chauffage auxiliaire (230) est relié à l'autre bord du dispositif de chauffage principal (210),
le premier dispositif de chauffage auxiliaire (220) est disposé de façon à correspondre à la première plaque de gril auxiliaire (120) pour ainsi appliquer des rayons infrarouges à la première plaque de gril auxiliaire (120), et
le second dispositif de chauffage auxiliaire (230) est disposé en correspondance avec la seconde plaque de gril auxiliaire (130) pour ainsi appliquer des rayons infrarouges à la seconde plaque de gril auxiliaire (130).

8. Appareil de gril selon la revendication 7, dans lequel
la première charnière de dispositif de chauffage (222) relie le bord supérieur du premier dispositif de chauffage auxiliaire (220) et le bord inférieur du dispositif de chauffage principal (210) entre eux, et
la seconde charnière de dispositif de chauffage (232) relie le bord supérieur du second dispositif de chauffage auxiliaire (230) et l'autre bord inférieur du dispositif de chauffage principal (210) entre eux.

9. Appareil de gril selon la revendication 1, dans lequel
une rainure de coulissement (215) est prévue dans le dispositif de chauffage principal (210) après perçage dans la direction longitudinale du dispositif de chauffage principal (210) au niveau de la partie inférieure des deux côtés du dispositif de chauffage principal (210) pour permettre au premier dispositif de chauffage auxiliaire (220) et au second dispositif de chauffage auxiliaire (230) d'être engagés avec ou désengagés du dispositif de chauffage principal (210) de manière coulissante, et
une saillie de coulissement (225) est prévue dans chacun du premier dispositif de chauffage auxiliaire (220) et du second dispositif de chauffage auxiliaire (230) pour être engagée avec ou désengagée de la rainure de coulissement (215) de manière coulissante.

10. Appareil de gril selon la revendication 6, dans lequel
un bouton d'alimentation (260) est inclus dans le dispositif de chauffage principal (210), le premier dispositif de chauffage auxiliaire (220) et le second dispositif de chauffage auxiliaire (230), respectivement, pour permettre à un utilisateur d'allumer ou d'éteindre l'alimentation de l'élément chauffant (213), du premier élément chauffant auxiliaire (223) et du second élément chauffant auxiliaire (233) séparément, respectivement.
